# EUROPÄISCHE PATENTSCHRIFT

(11) **EP 1 808 650 B1**
(45) Veröffentlichungstag und Bekanntmachung des Hinweises auf die Patenterteilung: **21.02.2018**
(21) Anmeldenummer: 06025993.4
(22) Anmeldetag: 15.12.2006
(51) Int. Cl.: F24J 2/52, H01L 31/042

(54) **Dachhaken**
roof hook
crochet de toiture

(30) Priorität: 21.12.2005 DE 202005019897 U
(43) Veröffentlichungstag der Anmeldung: 18.07.2007
(73) Patentinhaber: ROBERT BOSCH GMBH, 70442 Stuttgart (DE)
(72) Erfinder: Ewering, Stefan, 48629 Metelen (DE); Köbbemann-Rengers, Ralf, 48493 Wettringen (DE); Otting, Herbert, 49832 Beesten (DE)

(56) Entgegenhaltungen:
- EP-A2- 1 348 915
- DE-U1- 20 119 478
- DE-U1- 20 204 963
- DE-U1-202005 004 348

## Beschreibung

Die Erfindung betrifft einen Dachhaken nach dem Oberbegriff des Patentanspruches 1. Gattungsgemäße Befestigungsvorrichtungen für Sonnenkollektoren, insbesondere zur sogenannten Überdach- und Flachdachmontage, bestehen im Wesentlichen aus mindestens einer Trägerschiene als Träger zur Befestigung auf zugeordneten Dachhaken, welche auf einer Unterkonstruktion der Dacheindeckung befestigt sind und beispielsweise in die Lattung eingreifen. In der Regel kommen mindestens zwei parallel ausgerichtete Trägerschienen zum Einsatz, um daran ein Kollektorfeld, bestehend aus mehreren Sonnenkollektoren, zu befestigen. Zum Beispiel ergeben sich bereits mit vier Dachhaken und zwei Montageschienen als vertikal oder horizontal auf der Dachfläche ausgerichtete Träger Anschraubmöglichkeiten für Sonnenkollektoren. Bekannt sind beispielsweise Dachhaken mit Durchbrechungen und zugeordnete Profilschienen mit einer korrespondierenden Lochung. Mit einer Schraube werden beide Teile fixiert.

Die Trägerschienen sollten eine Verschiebbarkeit der Sonnenkollektoren bei der Montage ermöglichen und auch selbst an den Dachhaken etwas positionierbar sein. Dies ist wichtig, um beispielsweise die Rohrverbindungen zwischen den Sonnenkollektoren einfach herzustellen und das gesamte Kollektorfeld für einen guten optischen Eindruck genau auszurichten. Weil die Montagearbeiten teilweise unter ungünstigen Bedingungen auf schrägen Dachflächen und meistens auch mit geringstmöglichem Personalaufwand erfolgen müssen, wird generell ein hoher Vorfertigungsgrad aller Bauteile angestrebt.

Bekannte Befestigungsvorrichtungen zur Montage einer Trägerschiene für Sonnenkollektoren erforderten aber teilweise viele spezielle Kleinteile, welche bei der Handhabung möglicherweise leicht verloren gingen und auch eine entsprechende Schulung bzw. Erfahrung beim Personal voraussetzten. Außerdem war nicht immer gewährleistet, dass die Sonnenkollektoren und/oder die Trägerschienen nach dem Auflegen auf die Trägerkonstruktion noch geringfügig verschoben werden konnten, oder dass beim Lösen von Verbindungen zum Verschieben das Gewicht der Sonnenkollektoren gleichzeitig noch sicher abgetragen wurde.

Der Erfindung liegt daher die Aufgabe zugrunde, insbesondere die Montage von Sonnenkollektoren auf Dachflächen zu optimieren.

Erfindungsgemäß wurde dies mit den Merkmalen des Patentanspruches 1 gelöst. Vorteilhafte Weiterbildungen sind den Unteransprüchen zu entnehmen.

Der Dachhaken zur Befestigung eines Montagerahmens für mindestens einen Sonnenkollektor besteht aus einem Ober- und einem Unterteil, wobei das Oberteil eine von der Abwinklung mit Befestigungsvorrichtung ausgehende, in Längsrichtung des Oberteiles auskragende Stütze aufweist. Ober- und Unterteil weisen auf den einander zugeordneten Flächen ihrer vertikal abgewinkelten Schenkel spezielle Profilierungen auf, mit deren Hilfe sie formschlüssig miteinander verbunden werden können. Die Profilierungen bestehen aus sich ineinander legenden Rillenstrukturen, die eine Verstellung des Öffnungsverhältnisses ermöglichen. Gesichert wird diese Verbindung durch eine Verschraubung, wobei in einem Teil, zum Beispiel dem Oberteil, ein Rundloch, in dem anderen, zum Beispiel dem Unterteil, ein Langloch angeordnet ist.

Um aus dem U-förmigen Haken, wie er vorstehend beschrieben wird, einen S-förmigen Haken zu bilden, wird das Unterteil gegenüber dem Oberteil um 180° gedreht. Auch dann ist die Verbindung formschlüssig fixierbar, da entweder das Oberteil oder das Unterteil auf beiden Seiten seines vertikal abgewinkelten Schenkels mit einer Rillenstruktur versehen ist. Damit die Unterlegscheibe der Schraubverbindung die Rillenstruktur nicht beschädigt, weist sie ihrerseits dieselbe Struktur auf.

Bei der Montage auf dem Dach wird der Dachhaken mitsamt der auskragenden Stütze unter der abzutragenden Last von Montagerahmen und Sonnenkollektor elastisch verformt und liegt dann flächig auf der Oberseite des Dachziegels auf, wodurch er den Dachziegel insgesamt günstiger belastet als unter punktuell eingeleiteter Kraft.

Hierfür ragt die auskragende Stütze in einer ersten Ausführungsform in ihrer Längserstreckung über die von der Dachfläche weg zeigende Abwinklung hinaus. Die auskragende Stütze setzt dann zum Beispiel etwa auf der halben Höhe der von der Dachfläche weg zeigenden Abwinklung an und trifft mit ihrer Unterseite unter einem flachen Winkel auf die Dachziegelebene. Diese auf die Dachziegelebene treffende Stelle kann als Auflagefläche ausgebildet sein.

Ein anderes Ausführungsbeispiel ist dadurch gekennzeichnet, dass auf der Stütze eine Gummiauflage angebracht ist, die bei der Montage auf dem Dachziegel aufliegt. Die Gummiauflage wird dazu mit einer Nut- und Federverbindung formschlüssig an der Stütze fixiert. Die in verschiedenen Positionen mögliche Fixierung erlaubt die Einstellung verschiedener Höhen über der Auflagefläche des Dachhakens, wodurch dieser der Form und den Abmessungen von Dachziegel und Dachlatte angepasst werden kann. Die Gummiauflage weist dafür ein rechteckiges Profil mit mindestens einer nutartigen Aufnahme auf. Am Oberteil befindet sich seinerseits die dieser Nut zugeordnete Feder in Gestalt der auskragenden Stütze, die durch ihre Formgebung einen Formschluss zwischen Gummiauflage und Oberteil bildet.

Die zur Verspannung von Oberteil und Unterteil dienende Sechskantschraube wird gegen ein unbeabsichtigtes Verdrehen gesichert, indem sie sich mit ihrem Kopf an einer zugeordneten Fläche am Ober- oder Unterteil abstützt. Zur Fixierung des Montagerahmens dient eine Schiebemutter, die das Dachhaken-Oberteil an zwei Kanten umgreift und sich mit einer federnden Lasche gegen das Oberteil verklemmt. Durch diese Gestaltung ist sie gegen Herabfallen geschützt.

Mit der erfindungsgemäßen Gestaltung wird ein Dachhaken geschaffen, mit dem sich Sonnenkollektoren einfach und sicher auf einer Dachfläche montieren lassen. Die Vorteile bestehen darin, dass die Einzelteile verliersicher am Dachhaken befestigt sind, das Öffnungsverhältnis variabel ist, der Dachhaken seine Last flächig in den Dachziegel einleitet und sich an unterschiedliche Ziegelkonturen anpasst, wobei ein hierauf montierter Montagerahmen oder Sonnenkollektor sich in seiner Ausrichtung noch leicht korrigieren lässt.

Die Zeichnung stellt ein Ausführungsbeispiel der Erfindung dar. Jeweils in perspektivischer Ansicht zeigt:

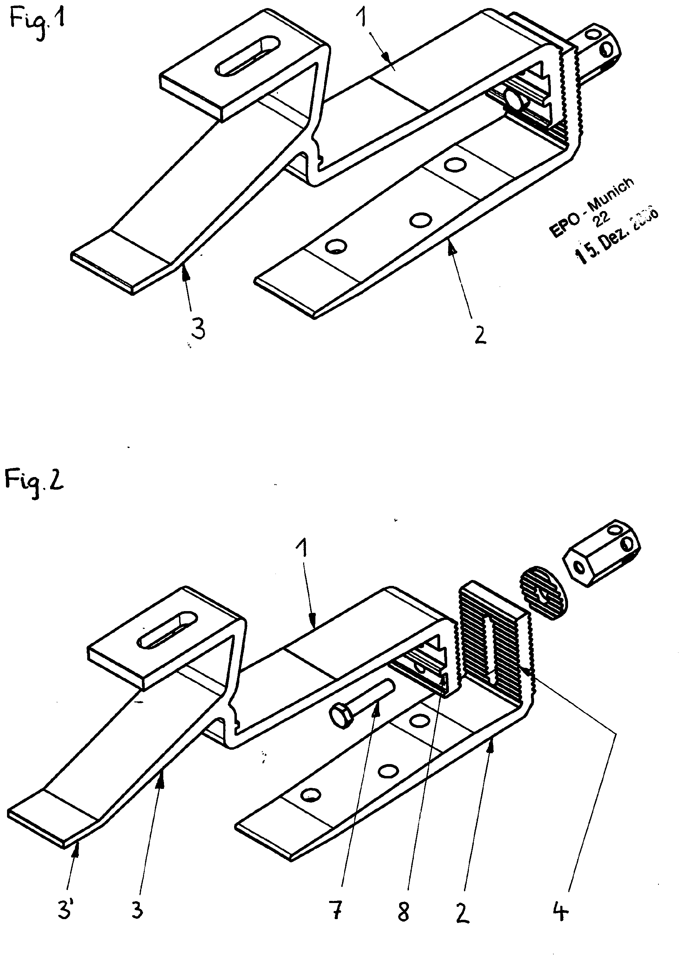

Fig. 1: einen zusammengebauten Dachhaken,
Fig. 2: Einzelteile des Dachhakens gemäß Fig. 1,

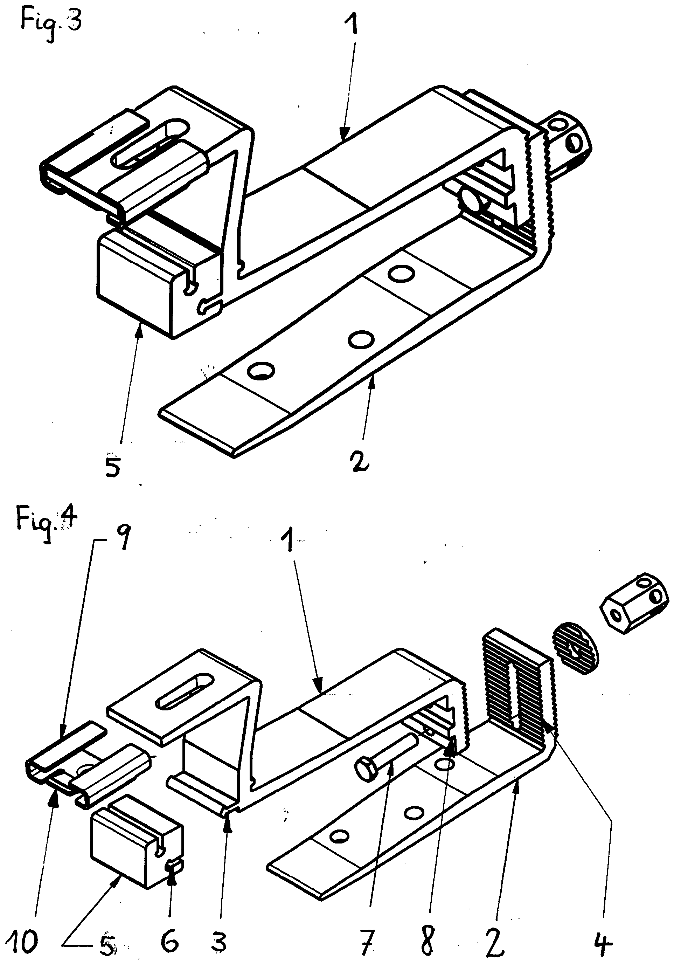

Fig. 3: einen zusammengebauten Dachhaken mit Gummiauflage,
Fig. 4: Einzelteile des Dachhakens mit Gummiauflage gemäß Fig. 3.

Der Dachhaken besteht aus einem Oberteil 1, einem Unterteil 2 sowie einer Stütze 3. Durch die Rillenstruktur 4 sowie durch eine geeignete Langlochanordnung an den Berührungsflächen von Oberteil 1 und Unterteil 2 lässt sich das Öffnungsverhältnis zur Anpassung an unterschiedliche Dachziegel- und Dachlattenformen verändern. Das Oberteil 1 und die Stütze 3 liegen unter Last flächig auf dem Dachziegel auf. Die Gummiauflage 5 mit der nutartigen Aufnahme 6 wird auf der auskragenden Stütze 3 geführt und ist in verschiedenen Positionen fixierbar. Die die beiden Dachhakenteile 1 und 2 verbindende Sechskantschraube 7 stützt sich an der zugeordneten Fläche 8 verdrehsicher ab. Die verliersichere Mutter 9 umgreift das Oberteil 1 an zwei Kanten und verklemmt sich mit einer federnden Lasche 10 gegen das Oberteil 1.

## Patentansprüche

1. Dachhaken, geeignet zur Befestigung eines Montagerahmens für Dachaufbauten, insbesondere für mindestens einen Sonnenkollektor, auf einer Dachfläche, welcher in die Lattung der Dacheindeckung eingreifen kann, die nach oben gerichtete Stirnseite eines Dachziegels mindestens teilweise übergreifen kann, auf der Oberseite des Dachziegels mit einer zugeordneten Fläche aufliegen kann und eine von der Dachfläche weg zeigende Abwinklung mit Befestigungsvorrichtungen besitzt, geeignet zur Befestigung von Teilen des Montagerahmens,
wobei der Dachhaken aus einem Oberteil (1) und einem Unterteil (2) besteht, dass das Oberteil (1) eine von der Abwinklung mit Befestigungsvorrichtung ausgehende, in Längsrichtung des Oberteiles auskragende Stütze (3) aufweist, dass Oberteil (1) und Unterteil (2) formschlüssig miteinander verschraubbar sind,
**dadurch gekennzeichnet, dass** die Öffnungsweite zwischen Oberteil (1) und Unterteil (2), geeignet zur Anpassung an unterschiedliche Dachziegel- und Dachlattenformen variabel einstellbar ist,
wobei das Oberteil (1) mitsamt der auskragenden Stütze (3) eine derartige Form aufweist, dass es sich unter der abzutragenden Last elastisch verformt, um flächig auf der Oberseite des Dachziegels aufliegen zu können, und
wobei die auskragende Stütze (3) etwa auf der halben Höhe der von der Dachfläche weg zeigenden Abwinklung ansetzt und unter einem flachen Winkel auf die den Dachziegel berührende Ebene trifft, wobei sie in dieser Ebene eine Auflagefläche (3') aufweist.

2. Dachhaken nach Anspruch 1,
**dadurch gekennzeichnet, dass** Oberteil (1) und Unterteil (2) auf einander zugeordneten Flächen ihrer vertikal abgewinkelten Schenkel eine sich ineinander legende Rillenstruktur (4) für den Formschluss zwischen beiden Teilen aufweisen, wobei in einem Teil ein Rundloch, in dem anderen ein Langloch angeordnet ist.

3. Dachhaken nach einem der Ansprüche 1 oder 2,
**dadurch gekennzeichnet, dass** das Oberteil (1) oder Unterteil (2) auf beiden Seiten seines vertikal abgewinkelten Schenkels mit einer Rillenstruktur (4) versehen ist, sodass das Unterteil (2) gegenüber dem Oberteil (1) um 180° gedreht formschlüssig fixierbar ist.

4. Dachhaken nach einem der Ansprüche 1 bis 3,
**dadurch gekennzeichnet, dass** die auskragende Stütze (3) in ihrer Längserstreckung über die von der Dachfläche weg zeigende Abwinklung mit Befestigungsvorrichtung für Teile des Montagerahmens hinausragt.

5. Dachhaken nach einem der Ansprüche 1 bis 4,
**dadurch gekennzeichnet, dass** eine Gummiauflage (5) auf die aus dem Oberteil (1) hervorspringende Stütze (3) aufgeschoben ist, wobei das Verdrehen der Gummiauflage (5) die Einstellung verschiedener Höhen über der Auflagefläche des Dachhakens ermöglicht.

6. Dachhaken nach einem der Ansprüche 1 bis 5,
**dadurch gekennzeichnet, dass** die Gummiauflage (5) ein rechteckiges Profil besitzt und auf ihrem Umfang mindestens eine nutartige Aufnahme (6) aufweist, die der hervorstehenden Strebe (3) am Oberteil (1) zugeordnet ist.

7. Dachhaken nach einem der Ansprüche 1 bis 6,
**dadurch gekennzeichnet, dass** sich die zur Verspannung von Oberteil (1) und Unterteil (2) dienende Sechskantschraube (7) an einer zugeordneten Fläche (8) am Oberteil (1) oder Unterteil (2) verdrehsicher abstützt.

8. Dachhaken nach einem der Ansprüche 1 bis 7,
**dadurch gekennzeichnet, dass** eine zur Fixierung des Montagerahmens dienende Schiebemutter (9) das Oberteil (1) an zwei Kanten umgreift und sich mit einer federnden Lasche (10) gegen das Oberteil (1) verklemmt.

## Claims

1. Roof hook, suitable for fastening a mounting frame for roof-mounted elements, in particular for at least one solar collector, on a roof surface, which roof hook can engage in the battening of the roof covering, can at least partially engage over the upwardly directed end side of a roof tile, can lie on the upper side of the roof tile with an associated surface and has an angled-off portion with fastening devices that points away from the roof surface, suitable for fastening parts of the mounting frame,
wherein the roof hook consists of an upper part (1) and a lower part (2), that the upper part (1) has a support (3) which emanates from the angled-off portion with the fastening device and projects in the longitudinal direction of the upper part, that the upper part (1) and lower part (2) can be screwed to one another in a form-fitting manner,
**characterized in that** the opening width between the upper part (1) and lower part (2) can be set in a variable manner so as to be suitable for adaptation to different roof tile and roof batten shapes,
wherein the upper part (1) together with the projecting support (3) has such a shape that it deforms elastically under the load to be dissipated in order to be able to lie flat on the upper side of the roof tile, and
wherein the projecting support (3) is positioned approximately at half the height of the angled-off portion pointing away from the roof surface and meets the plane contacting the roof tile at a shallow angle, said support having a bearing surface (3') in this plane.

2. Roof hook according to Claim 1, **characterized in that** the upper part (1) and lower part (2) are provided on mutually assigned surfaces of their vertically angled-off legs with an inter-engaging groove structure (4) for the form-fitting engagement between both parts, wherein a round hole is arranged in one part and an oblong hole is arranged in the other.

3. Roof hook according to either of Claims 1 and 2, **characterized in that** the upper part (1) or lower part (2) is provided with a groove structure (4) on both sides of its vertically angled-off leg, with the result that the lower part (2) can be fixed in a form-fitting manner with respect to the upper part (1) when rotated through 180°.

4. Roof hook according to one of Claims 1 to 3, **characterized in that** the projecting support (3) protrudes in its longitudinal extent beyond the angled-off portion, which points away from the roof surface, with the fastening device for parts of the mounting frame.

5. Roof hook according to one of Claims 1 to 4, **characterized in that** a rubber support pad (5) is pushed onto the support (3) which juts from the upper part (1), wherein rotation of the rubber support pad (5) allows the setting of different heights above the bearing surface of the roof hook.

6. Roof hook according to one of Claims 1 to 5, **characterized in that** the rubber support pad (5) has a rectangular profile and is provided on its periphery with at least one groove-like receptacle (6) which is assigned to the projecting strut (3) on the upper part (1).

7. Roof hook according to one of Claims 1 to 6, **characterized in that** the hexagon screw (7), which serves for bracing the upper part (1) and lower part (2), is non-rotatably supported on an associated surface (8) on the upper part (1) or lower part (2).

8. Roof hook according to one of Claims 1 to 7, **characterized in that** a sliding nut (9), which serves for fixing the mounting frame, engages around the upper part (1) at two edges and is clamped against the upper part (1) by a resilient tab (10).

## Revendications

1. Crochet de toit approprié pour la fixation d'un cadre de montage pour des constructions de toit, en particulier pour au moins un collecteur solaire, sur une surface de toit, qui peut s'engager dans le lattis de la toiture, peut engager au moins partiellement par le dessus le côté frontal orienté vers le haut d'une tuile de toit, reposer sur le côté supérieur de la tuile de toit avec une surface associée, et possède un coude tourné à l'opposé de la surface de toit avec des dispositifs de fixation appropriés pour la fixation de parties du cadre de montage,
le crochet de toit se composant d'une partie supérieure (1) et d'une partie inférieure (2), que la partie supérieure (1) présentant un support (3) partant du coude avec le dispositif de fixation, faisant saillie dans la direction longitudinale de la partie supérieure, que partie supérieure (1) et la partie inférieure (2) pouvant être vissées l'une à l'autre par engagement par correspondance de formes,
**caractérisé en ce que** la largeur d'ouverture entre la partie supérieure (1) et la partie inférieure (2) peut être ajustée de manière variable de façon appropriée pour l'adaptation à différentes formes de tuiles de toit et de lattes de toit,
la partie supérieure (1) conjointement avec le support saillant (3) présentant une forme telle qu'elle se déforme élastiquement sous la charge à supporter afin de pouvoir reposer à plat sur le côté supérieur de l'appui de toit, et
l'appui saillant (3) s'appliquant approximativement sur la moitié de la hauteur du coude tourné à l'écart de la surface de toit et arrivant suivant un angle plat sur le plan en contact avec la tuile de toit, et présentant dans ce plan une surface d'appui (3').

2. Crochet de toit selon la revendication 1, **caractérisé en ce que** la partie supérieure (1) et la partie inférieure (2) présentent, sur des surfaces associées l'une à l'autre de leurs branches coudées verticalement, une structure de rainures s'insérant (4) les unes dans les autres pour l'engagement par correspondance de formes entre les deux parties, un trou rond étant disposé dans une partie et un trou oblong dans l'autre.

3. Crochet de toit selon l'une quelconque des revendications 1 ou 2,
**caractérisé en ce que** la partie supérieure (1) ou la partie inférieure (2) est pourvue des deux côtés de sa branche coudée verticalement d'une structure de rainures (4), de sorte que la partie inférieure (2) puisse être fixée par engagement par correspondance de formes de manière tournée de 180° par rapport à la partie supérieure (1).

4. Crochet de toit selon l'une quelconque des revendications 1 à 3,
**caractérisé en ce que** le support saillant (3) fait saillie dans son étendue longitudinale au-delà du coude tourné à l'opposé de la surface de toit avec le dispositif de fixation pour des parties du cadre de montage.

5. Crochet de toit selon l'une quelconque des revendications 1 à 4,
**caractérisé en ce qu'**un recouvrement en caoutchouc (5) est enfoncé sur le support (3) faisant saillie hors de la partie supérieure (1), la rotation du recouvrement en caoutchouc (5) permettant l'ajustement de différentes hauteurs sur la surface d'appui du crochet de toit.

6. Crochet de toit selon l'une quelconque des revendications 1 à 5,
**caractérisé en ce que** le recouvrement en caoutchouc (5) présente un profilé rectangulaire et présente sur sa périphérie au moins un logement en forme de rainure (6) qui est associé au support saillant (3) sur la partie supérieure (1).

7. Crochet de toit selon l'une quelconque des revendications 1 à 6,
**caractérisé en ce que** la vis à six pans (7) servant à serrer la partie supérieure (1) et la partie inférieure (2) s'appuie de manière fixée en rotation sur une surface associée (8) sur la partie supérieure (1) ou sur la partie inférieure (2).

8. Crochet de toit selon l'une quelconque des revendications 1 à 7, **caractérisé en ce qu'**un écrou coulissant (9) servant à fixer le cadre de montage s'engage autour de la partie supérieure (1) au niveau de deux bords et se bloque avec une patte élastique (10) contre la partie supérieure (1).
